# EUROPEAN PATENT APPLICATION

(11) **EP 4 660 803 A1**
(43) Date of publication of application: **10.12.2025**
(21) Application number: 25171760.9
(22) Date of filing: 22.04.2025
(51) Int. Cl.: G06F 9/48, G06F 9/54, G06Q 10/0631, H04W 4/02, H04W 64/00

(54) **APPARATUS AND WIRELESS DEVICE FOR MANAGING INTRODUCTION OF USERS TO A PHYSICAL CONTEXT**

(30) Priority: 03.06.2024 SE 2450595
(71) Applicant: Sony Network Communications Europe B.V., 2132 LS Hoofddorp (NL)
(72) Inventor: THÖRN, Ola, 216 12 Limhamn (SE)
(74) Representative: Neij & Lindberg AB

(57) **Abstract**

An apparatus (200) for managing introduction of users to a physical context, said apparatus comprising logic circuitry (210) configured to control the apparatus to:
generate (410) a task list;
transmit (420), to an application client residing in a wireless device, data indicative of at least one task from said task list, wherein said data is indicative of an instruction, associated with the at least one task, to be presented on a user interface of the wireless device;
obtain (430) information associated with a task of the task list; and
process (440) the task list based on the obtained information.

## Description

### Technical field

This disclosure relates generally to technical solutions for facilitating introduction of users to a physical context, such as to a new workplace or social community, or a partly or wholly virtual representation of real physical context. The proposed solution involves an apparatus allowing management of the introduction, and an application client controlled by the apparatus, for use in a wireless device.

### Background

Joining a workplace or company, a new organization, or social community, presents challenges comes with lots of demands. This may involve learning the names of new colleagues, internal systems and the location of various departments, meeting rooms or other items such as tools or machines, and operation of such items. This process is sometimes referred to as onboarding. Such introduction is usually done with a combination of in person interactions, watching videos, reading presentations and perhaps a simple e-learning click through system. Challenges associated with introduction include, for example, developing an understanding of responsibilities, finding a way around, learning how to operate items, and connecting with relevant colleagues to be able to fulfil expectations in the new physical context and for obtaining an efficient introduction.

### Summary

The proposed solution targets challenges associated with introduction of users to a physical context, such as to a new workplace or environment. Such introduction is time consuming. This may be particularly challenging when many users shall be introduced to the new physical context at the same time, such as upon employment of a group of people or at the start of a new education at a schools or university.

According to a first aspect, the proposed solution comprises an apparatus for managing introduction of users to a physical context, said apparatus comprising logic circuitry, and may comprise at least one interface. Specifically, the logic circuitry may comprise a processor and a data storage medium operatively coupled to the processor, wherein the data storage medium comprises computer-executable code which, when executed by the processor, controls the apparatus to carry out various actions for managing the introduction, including to generate a task list. The apparatus is further configured to transmit, to an application client residing in a wireless device using the communication interface, data indicative of at least one task from said task list, wherein said data is indicative of an instruction, associated with the at least one task, to be presented on a user interface of the wireless device. The apparatus is configured to obtain information associated with a task of the task list, and to process the task list based on the obtained information. Said information may be indicative of at least one of a level of completion of the at least one task, availability associated with a task of the task list, and or proximity associated with a task of the task list. The apparatus may be a programmed computer or computer system.

According to a second aspect, the proposed solution comprises wireless device, which may be associated with the user to be introduced. The wireless device comprises logic circuitry and may comprise one or more interfaces. Specifically, the wireless device may comprises a processor and a data storage medium operatively coupled to the processor, wherein the data storage medium comprises computer-executable code which, when executed by the processor, controls the wireless device to carry out various actions associated with the introduction. This may include to implement an application client configured to guide user introduction to a physical context. The wireless device may further be configured to receive, from an apparatus configured to manage the introduction, data indicative of at least one task from a task list, and to present, on a user interface of the wireless device, an instruction indicated by said data, associated with the at least one task.

The proposed solution provides an improved technical system for managing introduction of users to a physical context. The apparatus allows for a manager, an operator, or an automated system module of the apparatus, to control the introduction process. The task list may be generated based on various criteria, such as based on required or desired interactions to made by the new user, previous experience or knowledge of that user, timing requirements, etc. The application client on the wireless device, which communicates with the apparatus, provides for tasks of the generated task list to be presented on a user interface. The proposed solution further allows for convenient generation of new tasks, or reordering of tasks to be carried out, based on feedback comprising information associated with a level of completion of, or wireless device proximity to a position associated with a task, or availability associated with a task. Such feedback may be obtained from the application client, e.g., automatically based on location or interaction using the wireless device or based on user input on the wireless device. Other options include obtaining feedback from an infrastructure, such as from a positioning system tracking a location of the wireless device, or from items reported interaction with the wireless device. The proposed system thus allows for tasks to be automatically reordered in a manner which is appropriate for efficient introduction, such as based on proximity to locations of items, persons, or facilities for the user to interact with, and/or based on which tasks have actually been completed. The proposed solution further provides a mechanism of dynamic processing of the task list, to obtain a technical solution which promotes efficient user introduction.

### Brief description of the drawings

Various embodiments will be described with reference to the drawings.
Fig. 1 schematically illustrates a system for introduction of a user to a physical context.
Fig. 2 schematically illustrates functional elements included in an apparatus for managing introduction of a user, based on the system of Fig. 1.
Fig. 3 schematically illustrates functional elements included in a wireless device operating in the system of Fig. 1.
Fig. 4 shows an example of a process carried out using the apparatus of Fig. 2 for introduction of a user to a physical context.
Fig. 5A shows a first example of a task list, presented on a wireless device.
Fig. 5B shows a second example of a task list, as a reconfigured version of the task list of Fig. 5A.
   presented on a wireless device.
Fig. 6A shows a visual example of presentation of the task list on a user interface of the wireless device.
Fig. 6B illustrates presentation of further information on the display, associated with one task of the task list.

### Detailed description

The invention will be described more fully hereinafter with reference to the accompanying drawings, in which embodiments of the invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art.

It will be understood that, when an element is referred to as being "connected" to another element, it can be directly connected to the other element or intervening elements may be present. In contrast, when an element is referred to as being "directly connected" to another element, there are no intervening elements present. Like numbers refer to like elements throughout. It will furthermore be understood that, although the terms first, second, etc. may be used herein to describe various elements, these elements should not be limited by these terms. These terms are only used to distinguish one element from another. For example, a first element could be termed a second element, and, similarly, a second element could be termed a first element, without departing from the scope of the present invention. As used herein, the term "and/or" includes any and all combinations of one or more of the associated listed items.

Well-known functions or constructions may not be described in detail for brevity and/or clarity. Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of this specification and the relevant art and will not be interpreted in an idealized or overly formal sense expressly so defined herein.

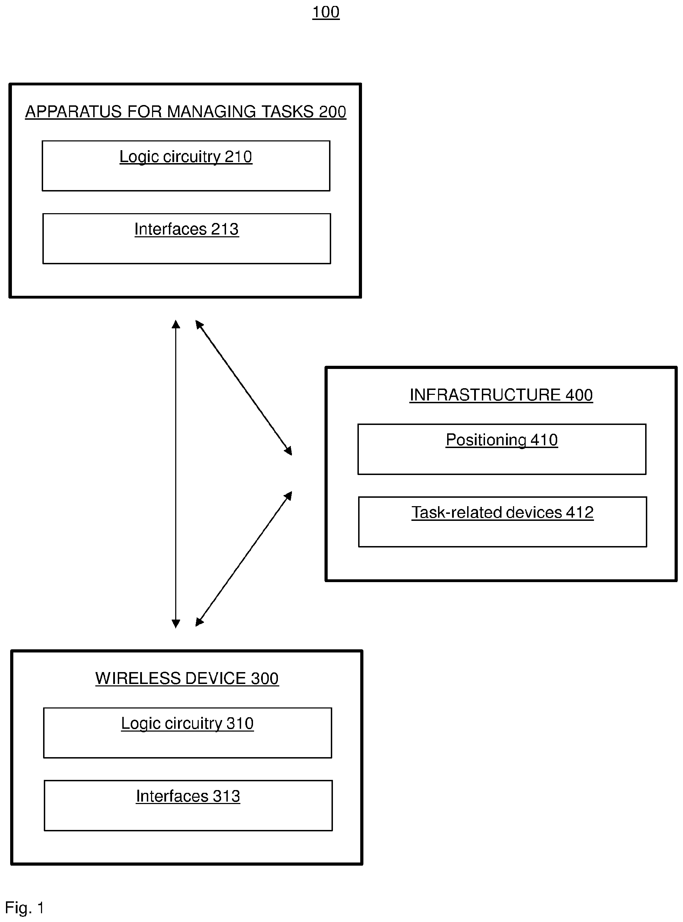

Fig. 1 schematically illustrates various entities included in a system 100 for managing introduction of a user to a new physical context. As noted, this may, inter alia, relate to onboarding to a new workplace or department, a new school, organization, or other context that involves a need or desire for the user to interact with places, items, persons of that physical context for the purpose of introduction. The physical context may additionally partly or wholly comprise a virtual representation of real physical context, such as an augmented reality or extended reality context. Introduction to a physical context shall thus be understood as a context in which a user needs to interact with different real life or virtual items, users, and/or locations. Introduction may thus serve to show, inform, or teach the user about such places, items, or persons. Furthermore, management of the introduction serves to follow up how the introduction runs and/or to react to how the introduction shall continue to be carried out.

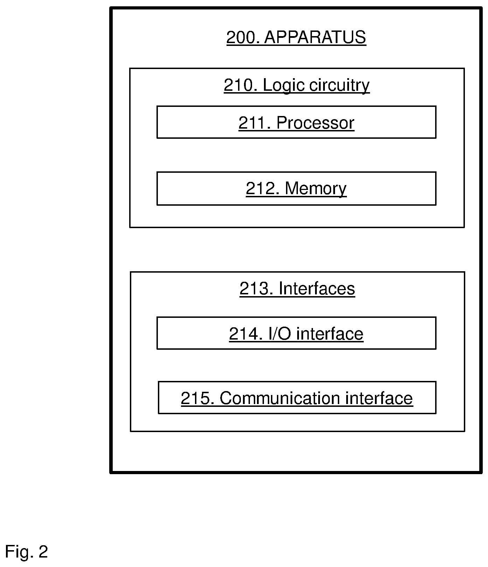

The system 100 comprises an apparatus 200 for managing introduction of users to a physical context. In the context of the system 100, the apparatus 200 is configured for managing tasks, which are generated for the user and processed based on feedback indicative of a level of completion of the tasks, as will be further described and exemplified below. The apparatus 200 may be a computer, or computer system, which comprises logic circuitry 210 configured to control the apparatus to carry out various acts. The logic circuitry 210 may comprise a processor and stored or otherwise accessible executable code that may be executed by the processor. The code may, as such, be stored in memory storage in the apparatus 200, on a separate memory device which can be connected to the apparatus, or in one or more cloud servers. The apparatus 200 further comprises one or more interfaces 213, for operating the apparatus 200 and for communicating with other entities of the system 100. Further exemplary details of the apparatus 200 will be outlined with reference to Fig. 2.

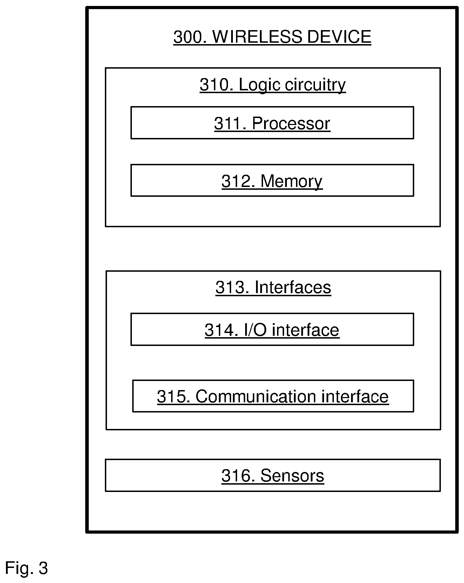

The system 100 further comprises one or more wireless devices 300. In various examples, the wireless device 300 may be a portable computer, a mobile phone, or a tablet. The wireless device 300 comprises logic circuitry 310 configured to control the wireless device to carry out various acts. The logic circuitry 310 may comprise a processor and stored or otherwise accessible executable code that may be executed by the processor. The logic circuitry is configured to implement an application client configured to guide user introduction to a physical context. The application client may operate in conjunction with an application host residing in the apparatus 200 or in a network server (not shown). The application host is configured to be controlled by the apparatus 200, such that information may be passed between the apparatus 200 and the wireless device 300, within an application which operates the application client. The wireless device 300 is configured to receive, from the apparatus 200, data indicative of at least one task from a task list, and to present, on a user interface of the wireless device, an instruction indicated by said data, associated with the at least one task. The wireless device 300 may thus comprise one or more interfaces 313, for operating the wireless device 300 and for communicating with other entities of the system 100, such as the apparatus 200. Further exemplary details of the wireless device 300 will be outlined with reference to Fig. 3.

The system may further comprise, or make use of, an infrastructure 400 configured to assist in the management of the introduction. The infrastructure 400 may comprise one or more systems providing a positioning service 410, which may be configured to provide positioning of the wireless device 300 and/or items, persons, or location associated with said tasks. In one example, the positioning service may comprise a satellite-based service, such as GPS (Global Positioning System), wherein the wireless device 300 comprises a satellite signal receiver and is configured to report its determined position to the apparatus 100. The positioning service may comprise connectivity of the wireless device 300 to a wireless communication network which operates RAT-based positioning (Radio Access Technology) based on signals from various access points (e.g., base stations) of the wireless communication network, which may be a cellular network. The positioning service may comprise a system based on local connectivity, e.g. Bluetooth, configured to detect proximity of the wireless device 300 to different local connectivity detectors, such as Bluetooth beacons in environment or other wireless devices. The positioning service may comprise an access card system where the location of card readers is logged to meeting rooms or other places, wherein use of the access card by the user determines current location. In this context, the access card may be a separate card, or optionally be incorporated in the wireless device 300. According to any of these examples, where a task is defined to be associated with a position, determined proximity to or location at such position may trigger the task to be logged as completed in the system, typically by the logic circuitry of the apparatus 200. The report of completion may be provided to the apparatus 200 by the wireless device 300, or by another item or entity of the infrastructure 400 at which the presence of the wireless device 300 is detected or with which interaction of the wireless device 300 is determined. In this context, the infrastructure 400 may comprise one or more task-related devices 412, which may be communication devices such as active communication modules or passive tags associated with a task. Interaction with a certain task-related devices 412, using the wireless device 300, may indicate e.g., level of completion of a task, interaction associated with an item related to a task, proximity to a location associated with an item, or other, which may be reported to the apparatus.

Fig. 2 schematically illustrates an example of the apparatus 200, configured to carry out the various method steps outlined herein. The apparatus 200 may comprise a computer with stored or otherwise accessible computer-program code. The apparatus 200 comprises logic circuitry 210 configured to control the apparatus 200 to manage introduction of users to a physical context, wherein the user is associated with a wireless device 200.

The logic circuitry 210 may include a processing device 211, or processor 211 for short, which may include one or multiple processors, microprocessors, data processors, co-processors, and/or some other type of component that interprets and/or executes instructions and/or data. Processor 211 may be implemented as hardware (e.g., a microprocessor, etc.) or a combination of hardware and software (e.g., a system-on-chip (SoC), an application-specific integrated circuit (ASIC), etc.). The processor 211 may be configured to perform one or multiple operations based on an operating system and/or various applications or programs.

The logic circuitry 210 may further include memory storage 212, which may include one or multiple memories and/or one or multiple other types of storage mediums, such as non-transitory storage mediums. For example, memory storage 212 may include a random access memory (RAM), a dynamic random access memory (DRAM), a cache, a read only memory (ROM), a programmable read only memory (PROM), flash memory, and/or some other type of memory. Memory storage 212 may include a hard disk (e.g., a magnetic disk, an optical disk, a magneto-optic disk, a solid state disk, etc.). The memory storage 212 is configured for holding computer program code, which may be executed by the processor 211, wherein the logic 210 is configured to control the apparatus 200 to carry out any of the method steps as provided herein. Software defined by said computer program code may include an application or a program that provides a function and/or a process. The software may include device firmware, an operating system (OS), or a variety of applications that may execute in the logic 210. The memory storage 212 thus provides a data storage medium operatively coupled to the processor 211, wherein the data storage medium comprises computer-executable code which, when executed by the processor 211, controls operation of the apparatus 200.

The logic circuitry 210 may thus comprise a processor 211, and a data storage medium 212 operatively coupled to the processor 211, wherein the data storage medium 212 comprises computer-executable code which, when executed by the processor 211, controls the apparatus 200 to execute the various steps presented herein.

The apparatus 200 further comprises at least one interface 213.

The interface 213 may include input/output (I/O) interface(s) 214, for interaction with the apparatus 200 by an operator, such as a manager of the user to be introduced or another person handling user introduction to the physical context at hand, i.e., a company, school, organization, or other. The I/O interface 214, which may comprise standard features such as keyboard and display, speakers, microphone, or other, may be used for, inter alia, initiating, updating and terminating the introduction process, and for creating, reviewing, and processing a task list.

The interface 213 may include one or more communication interfaces 215. The communication interface 215 may comprise a wired interface and/or wireless interfaces, for connection with other entities within or connected to the system 100. The communication interface 215 may comprise a wireless transceiver, such as a radio transceiver for communicating with other entities of the system, including the wireless device 300. The communication interface 215 may further provide connectivity to other entities of the infrastructure 400, such as positioning systems 410 or task-related devices 412. The communication interface 215 may be configured to provide communicative access between the logic circuitry 210 and an application client stored in the wireless device 300, configured to guide user introduction to a physical context. For this purpose, the memory storage 212 may further store computer readable code implementing an application host, which controls the application client. Alternatively, the communication interface 215 provides the logic circuitry 210 control access to an application host stored in a remote location, such as on an application server (not shown).

Fig. 3 shows some elements or functions of the wireless device 300. The wireless device 300 may be a wearable device or a mobile device, such as a mobile phone, a portable computer, a tablet, a wrist-held device, a visor device, or any combination of such portable device examples.

The wireless device 300 comprises logic circuitry 310 configured to data handling and communication in association with user introduction to a physical context. The logic circuitry 310 is configured to control the wireless device 300 to carry out any of the steps associated with the proposed solution as outlined herein.

The logic circuitry 310 may include a processing device 311, or processor 311 for short, including one or multiple processors, microprocessors, data processors, co-processors, and/or some other type of component that interprets and/or executes instructions and/or data. The processor 311 may be implemented as hardware (e.g., a microprocessor, etc.) or a combination of hardware and software (e.g., a system-on-chip (SoC), an application-specific integrated circuit (ASIC), etc.). The processor 311 may be configured to perform one or multiple operations based on an operating system and/or various applications or programs.

The logic circuitry 310 may further include memory storage 312, which may include one or multiple memories and/or one or multiple other types of storage mediums, such as non-transitory mediums. For example, the memory storage 312 may include a random access memory (RAM), a dynamic random access memory (DRAM), a cache, a read only memory (ROM), a programmable read only memory (PROM), flash memory, and/or some other type of memory. The memory storage 312 may further comprise a persistent memory, which is configured to maintain its state and hold its data even when not powered. The persistent memory may further be writable. The memory storage 312 may include a hard disk (e.g., a magnetic disk, an optical disk, a magneto-optic disk, a solid state disk, etc.). The memory storage 312 is configured for holding computer program code, which may be executed by the processor 311, wherein the logic circuitry 310 is configured to control the wireless device 300 to carry out any of the method steps as provided herein. Software defined by said computer program code may include an application or a program that provides a function and/or a process. The software may include device firmware, an operating system (OS), or a variety of applications that may execute in the logic circuitry 310. The memory storage 312 is used for storing computer program code, executable by the processor 311, which implements an application client configured to guide user introduction to a physical context.

The logic circuitry 310 may thus comprise a processor 311, and a data storage medium 312 operatively coupled to the processor 311, wherein the data storage medium 312 comprises computer-executable code which, when executed by the processor 311, controls the wireless device 300 to execute the various steps presented herein.

The wireless device 300 further comprises at least one interface 313.

The interface 313 may include input/output (I/O) interface(s) 314, also referred to as user interface, for interaction with the wireless device 300 by a user of the wireless device 300, such as a person subjected to user introduction to the physical context at hand, i.e., a company, school, organization, or other. The I/O interface 314 may comprise standard features such as keyboard and display, speakers, microphone, or other. The I/O interface 314 may be used, by the logic circuitry 310, for presenting at least one task of a task list, such as an instruction associated with the at least one task, or a list of a plurality of tasks included in a task list generated by the apparatus 200. This may include displaying map guidance associated with a task. The I/O interface 314 may further be used, by the logic circuitry 310, for detecting input by a user, e.g., to docket task completion, or for presenting further information associated with a task upon detecting user query.

The interface 313 may include one or more communication interfaces 315. The communication interface 315 may comprise a wireless interface, for connection with other entities within or connected to the system 100, such as with the apparatus 200 or an application host. In this context, the wireless device 300 may be configured to receive, from the apparatus 200, data indicative of at least one task from a task list.

The communication interface 315 may comprise a wireless transceiver, such as a radio transceiver for communicating with other entities of the system, including the apparatus 200. The communication interface 315 may thus provide connectivity over a communication network, as described for the apparatus 200. The communication interface 315 may further provide connectivity to other entities of the infrastructure 400, such as positioning systems 410 or task-related devices 412.

The communication interface 315 may comprise one or more short-range modules, e.g., a tag reader such as an RFID (Radio Frequency Identification) reader, an NFC (Near Field Communication) communication module, a Bluetooth module, or similar. Such a short-range module may in some examples implement an access card functionality, which can operate in short range communication with a card reader at an item or a door to provide access. The short-range module may be used for interaction between the wireless device 300 and a cooperating communications module on an item to interact with according to a task, which item may include another wireless device of another person. Such a cooperating communications module or tag may thus implement a task-related device 412. The communication interface 315 may further provide connectivity to other entities of the infrastructure 400, such as positioning systems 410, as described. The logic circuitry 310 of the wireless device 300 may thus be configured to obtain the position of the wireless device 300, and optionally present its position on a map representation on a display of the I/O interface 314, in the application client. The logic circuitry 310 of the wireless device 300 may further be configured to present tasks in an order dependent on its obtained position. This way, time-efficient task completion is facilitated.

In some examples, the wireless device 300 further comprises one or more sensors 316, which may be used for determining status or level of completion related to a task. By way of example, the sensors 316 may comprise sensors for detecting one or more of vibration or movement (e.g., and accelerometer or gyroscope), sound (e.g., a microphone), temperature (e.g., a thermometer), smell (e.g., a biomimetic gas sensor), radiation (a radiation sensor, e.g., a Geiger counter), humidity (e.g., including a capacity sensor), wind (e.g., an ultrasonic sensor), position (e.g., a GPS receiver) or other. The logic circuitry 310 may be connected to obtain measurement data from the sensors 316, such as a measurement value or an indication that one or more of the sensors 316 detects a measurement value meeting a certain sensor criterion, e.g., that a measurement value exceeds a measurement threshold level. In this context, a task may be associated with such a sensor measurement value or sensor criterion, wherein the logic circuitry 310 is configured to detect that the wireless device 300 is subjected to an environment where said sensor criterion is met or said measurement value is obtained. This may be used, by the wireless device 300, to provide feedback to the apparatus 200, which is indicative of a level of completion of the task, or proximity to a location where said environment exists.

The wireless device 300 may include other features and elements than those shown in the drawing or described herein, such as a casing, sensors, power supply, etc., but these are left out for the sake of simplicity.

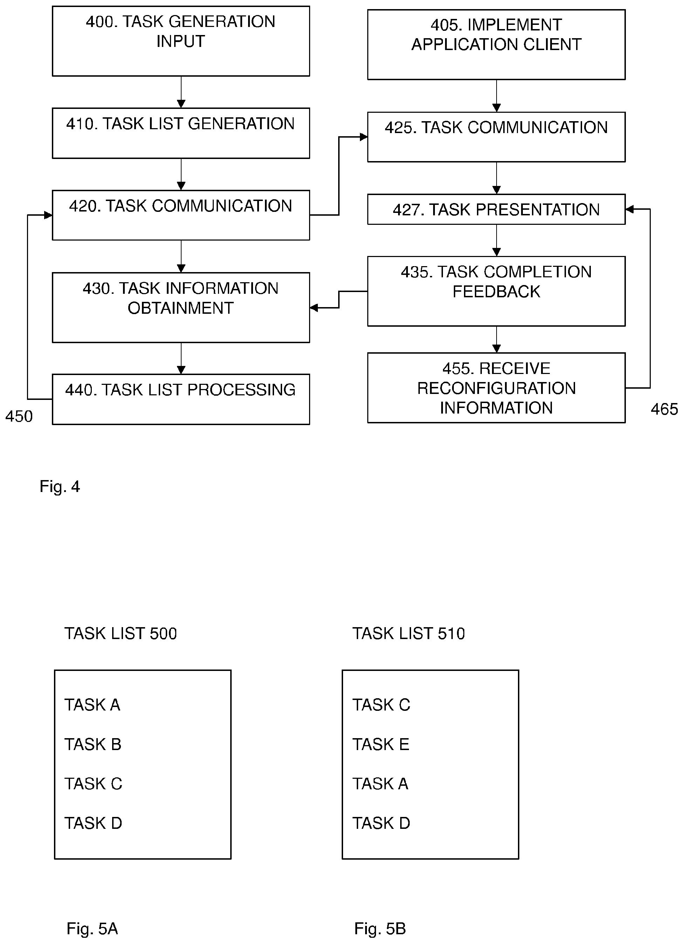

Fig. 4 schematically illustrates various steps carried out in the system 100, including at least the apparatus 200 and the wireless device 300, according to an example of the proposed solution. Acts carried out under control of the apparatus 200 are shown in the left column of Fig. 4. Acts carried out under control of the wireless device 300 are shown in the right column of Fig. 4. Reference will first be made to the steps of the apparatus 200.

At step 400, task generation input may be provided to the apparatus 200. This may include input or selection of the user(s) to introduce, and/or wireless device(s) 300 associated with such user(s). This task generation input may further include input of information based on which tasks are to be generated. This information may include a definition of a role of the user to be introduced, for instance status or position within the physical context, such an employment category or management category. The information may further comprise access-related information, defining physical locations, such as rooms, floors, departments, or buildings, for the user to be given access to or to be visited by the user. The task generation input may further comprise providing input of information associated with prior knowledge or experience of the user associated with the wireless device 300, which may influence selection of tasks deemed required for the instruction. This may involve input of previous experience within the physical context, which may be beneficial if the user promoted or drafted to a new assignment within the same company, where knowledge of various locations, items and people has already been obtained by the user. In some examples, the task generation input may be an automated process, by obtaining, in the apparatus, information of an identity of the user or the wireless device 300, and a role of that user, from an external entity, such as an employment or student system. In other examples, one or more information bits of the task generation input may be provided to the apparatus 200 by manual input using the I/O interface 214, by an operator of the apparatus 200, herein referred to as a manager of the system 100. Such information bits may include one or more of selecting a user, selecting physical facilities the user needs to visit (e.g. be meeting rooms, staircases, gym, cafe etc), other people to interact with, or items to check out.

At step 410, task list generation is executed in the apparatus. Where task generation input was executed, the task list may be at least partially executed based on the task generation input. The task list generation produces a number of tasks for the user to carry out, for the purpose of introduction to the physical context. Fulfilment or completion of all tasks on the task list may be determined to represent either full or partial completed instruction. Task list generation may be an automated process by the logic circuitry 210, which may be based on operator input and/or the task generation input 400. In some examples, the operator of the apparatus 200 can further define tasks that need to be completed, or provide further information associated with generated tasks, using the I/O interface 214. In some examples, each task may be given a certain priority level, wherein the task list is generated with a task order based on the priority order. In some examples, tasks may be generated with dependency, wherein a certain task can or shall preferably be carried out dependent on another task previously having been detected as completed. The task list may thus be generated with an order based on such task dependence. In some examples, each task may be given an associated location. The task list may thus be is generated with a task order based on location associated with various tasks, to promote time-efficient introduction. In some examples, such location information of a task may be dynamic, such as the location of other wireless devices of persons to interact with, and the task list may thus be iteratively processed (also in step 440) to alter the order of tasks, dependent on location of the wireless device 300 and location of items or persons associated with tasks. In some examples, each task may be given an associated timing, such as an availability time. The task list may thus be is generated with a task order based on associated timing of various tasks, to promote time-efficient introduction.

As described, the task list may be generated based on, e.g., role description, whereas tasks may be dynamically populated and rearranged based on and location, timing and order of completion. The character of each task is not, as such, crucial to the proposed solution. By way of example, tasks may include facilities the user needs to visit or access, items to try out, and persons the user shall meat or interact with. The operator can define tasks that needs to be done, e.g.:
- Go to "room 4 and floor 6"
- Go to cafe on second floor show this code and get a free coffee
- Go to Department x and introduce yourself
- Go to meeting room y plug in your computer and show a presentation (to learn how it works)
- Go to meeting room z and try the video conference system.

A compilation of various tasks may be preprogrammed, and tasks for a certain user to be introduced may be selected from that compilation when generating the task list, based on the task generation input 400. As noted, the selection of tasks may be automated based on the task generation input 400 and may additionally allow for operator reconfiguration of the tasks.

At step 420, task communication is carried out. This may be carried out using communication interface 215. This step involves providing the application client, residing in the wireless device 300 of the user, data indicative of at least one task of the task list, or of the full task list. Said data is indicative of an instruction, associated with the at least one task, to be presented using the I/O user interface 314 of the wireless 300. 2. The instruction may be associated with at least one of a location and interaction with an item related to the at least one task. In some examples, the task may further comprise a criterion for detecting, by the wireless device 300, whether the task is completed. Such criterion may include one or more sensor criteria, as described, or detected communication connection with or proximity to an item or location. Said item may be at least one of a person and a device to interact with, such as a printer, a coffee machine, a website associated with the job description or the physical context, etc. In some examples, the item to which a task is related may be a mobile device, such as a vehicle or an appliance which is useful in the physical context to which the user is to be introduced. By way of example, the item may be a car, a forklift, a hospital appliance such as a portable diagnostic device or therapeutic device (e.g., X-ray machine, a defibrillator, etc.), a projector, or other. Where a task is related to the user being requested to interact with such a mobile item (e.g., see or try out), the data indicative of the task may also comprise location information related to that item. The location information may comprise a current or last known position of the item, as obtained from the positioning system 410, or data which configures the wireless device 300 to obtain the current position, such as an ID or signal characteristic which is transmitted from the mobile item. The instruction may provide further information associated with an associated completion level, such as visit, use, read, connect, etc.

At step 430, information associated with a task is obtained in the apparatus 200. This information may be obtained in the apparatus 200 using communication interface 215.

In some examples, the information comprises task completion feedback, which provides information, to the apparatus 200, associated with a level of completion of, or wireless device 300 proximity to a position associated with, the at least one task that was communicated in step 420. The task completion feedback may in some examples, or for some tasks, be received from the wireless device 300 or from a task-related item 412 related to the task. In some examples, such automated task completion feedback is obtained in the apparatus 200 based on the application client in wireless device 300 is configured to automatically signal task completion based on a predetermined criterion associated with the task at hand, such as location at or in a level of proximity to a predetermined position (e.g., based on input from the positioning system 410), or detected interaction with a task-related item 412. In other examples, automated task completion feedback is obtained in the apparatus 200 from a task-related item 412 being configured to automatically signal task completion based on detected interaction with the user device 300. This may, e.g., be obtained by a communications device (e.g., a modem or Bluetooth receiver) arranged at the item, which detects and reports, to the apparatus 200, the presence of the wireless device 300 or the accomplishment of a certain action at the item (starting, operating, logging in, or other) using the wireless device 300. In other examples, automated task completion feedback is obtained in the apparatus 200 from the positioning system 410, based on a location of the wireless device 300 at a predetermined position, or at a level of proximity to a predetermined position, being detected.

In some examples, the obtained information comprises availability information associated with one or more tasks of the task list, such as the at least one task or other tasks of the task list. Such availability information may indicate occupancy or crowdedness of an item 412 or location associated with a task. By way of example, such availability information may be determined in the apparatus 200 based on, e.g., communication data obtained from other wireless devices or from communication devices at said item 412 or location, indicating that a large number (e.g., exceeding a preset threshold value) of other users are concurrently accessing, or are scheduled to access (based on task lists associated with such other users), the same task 412 or location. Likewise, the availability information may indicate that a particular item 412 or location is under-utilised, currently or at a scheduled time, such that availability is improved.

In some examples, the obtained information comprises proximity information associated with one or more tasks of the task list. This may be obtained in the apparatus 200 from the positioning system 412, which may indicate location of items or locations associated with tasks and of the wireless device 300, or location of other users under introduction. In some examples, the proximity information may be indicative of presence at a certain area, such as a room, building, or geographical area, of a plurality of users which are subjected to introduction to the physical context, such as onboarding. This may be beneficial for organizing the task lists for each of those users such that groups of users are triggered to do the same task(s) at the same time to obtain more effective introduction, or perhaps having certain groups avoiding each other where different type of introduction at a certain item or location is provided to different groups.

At step 440, task list processing is carried out, based on the obtained information.

In some examples, the processing is based on task priority, such as a priority level as described. This may be arranged such that the task list is at least partially ordered according to priority, i.e., in an order of the priority level. Such task priority may in some examples be dynamically changed, for one or more, or all, tasks, and may e.g., be set and changed by an operator of the apparatus 200, or automatically based on the obtained information associated with one or more of task completion information, availability information, and proximity information.

In some examples, this task processing comprises dynamically reordering the tasks of the task list. This may be based on a level of completion of, or wireless device proximity to a position associated with, the at least one task, and/or availability information associated with a task of the task list, and/or proximity of the user device 300 to an item or location associated with a task.

Processing may involve reordering the task list and/or recording the at least one task as completed in the apparatus 200. In some examples, the task list processing may comprise triggering message transmission to the apparatus 200 or an operator of the introduction, indicating the task completion.

In some examples, the logic circuitry 210 is configured to control the apparatus 200 to process the task list to add a task, and/or rearrange order of tasks, in the task list based on the obtained information. This may be carried out based on obtained availability information and/or proximity information associated with one or more tasks of the task list. This may e.g., be convenient, where availability of an item or location associated with a task X of the task list has improved, or where location of the wireless device 300 has been detected to be proximate to a position associated with a task X of the task list. In such a scenario, the processing of step 440 may reorder tasks of the task list to move that task X up in the task list (i.e., assigning a higher priority level to that task X), e.g., to a top of the tasks which are transmitted to the wireless device 300, or to transmit information indicative of that task X to the wireless device 300, for presentation on its I/O interface 314. This has the benefit of automatically adapting the task list for efficient total completion of the introduction. Correspondingly, if obtained availability information indicates that an item or location associated with task X is poor, e.g., below a certain threshold level, the processing of step 440 may reorder tasks of the task list to move that task X down in the task list (i.e., assigning a lower priority level to that task X).

At step 450, the step of returning to task transmission 420 is indicated, where this transmission is based on the task list processing 440. This provides updated information to the wireless device 300, such as based on the dynamic processing 440 in the apparatus 200. The transmission may be carried out using communication interface 215. The logic circuitry 210 is thereby configured to control the apparatus 200 to transmit reconfiguration instructions to the application client based on the processed task list, wherein said reconfiguration instructions configure the application client to add a task, and/or rearrange order of tasks, to be presented on the I/O interface 314.

The combined steps of dynamic processing 440 and the transmission 450 of reconfiguration instructions which orders the task list based on the obtained information, provides the benefit of time-efficient introduction. By way of example, reordering of tasks may be based on location/position, such that if a user has selected to do task 1, but ends up passing the location for task 5, the transmission 450 of the reconfiguration information may trigger a notification on the I/O interface 314 on the wireless device 300 that task 5 may conveniently be made prior to task 1 (unless the tasks need to be done in a certain order).

By way of example, location may be detected in the task list processing 440 of a further wireless device of another person, with whom the user is requested to interact according to the generated task list, in proximity to the wireless device 300 of the user to be introduced. The task list processing of step 440 may thus move or add a task associated with that other person up to a top of the tasks for presentation by the application client, or to transmit data indicative of such task to the application client if that has not yet been done.

With reference to wireless device 300, the following acts may be pointed out, where those acts are carried out in the wireless device under control of the application client.

At step 405, the wireless device 300 implements an application client. This may be a carried out at a separate occasion, such as by download of application client software code from an application server, or from the apparatus 200. This may be carried out using communication interface 315. The application client software code may be stored in the memory storage 312 and be executable by the processor 311.

At step 425, the application client receives, from the apparatus 200, data indicative of at least one task from a task list, such as the task list generated at step 420. This may be carried out using communication interface 315.

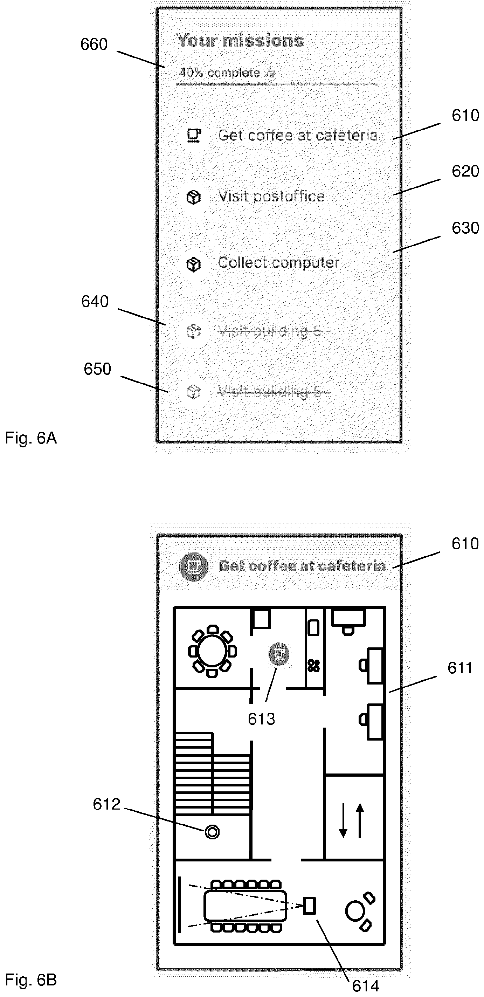

At step 427, the application client presents, on the I/O interface 314, at least one instruction indicated by said data, associated with the at least one task. This will be further described and exemplified with reference to Figs 5A, 5B, 6A, and 6B.

In some examples, detection of task completion is registered in the wireless device 300, as exemplified. This registration may be obtained out using communication interface 315 or I/O interface 314. This may include obtaining information indicative of a level of completion, or wireless device proximity to a location, of the at least one task. In such a case, step 427 includes transmitting the information associated with task completion to the apparatus 200.

At step 455, the wireless device 300 receives reconfiguration instructions from the apparatus 200. This may be carried out using communication interface 315. As described above, this may relate to addition of tasks, or reordering of tasks (such as based on updated priority of one or more tasks), and may be based on any combination of task completion, on location or proximity, on timing, on availability, and on task dependency.

At step 465, the wireless device 300 reconfigures presentation of tasks on the user interface 314, based on the reconfiguration instructions. This will be further described with reference to Figs 6A and 6B.

In some examples, task lists may be shared between users or groups of users. This may be accomplished by the apparatus 200, or the wireless device 300, being configured to transmit task list information associated with one user, comprising included tasks and possibly information of completed tasks, to at least one other user or a group of users. This may facilitate completion of tasks together, which may promote interaction with other users, such as fellow new employees.

In some examples, a value parameter may be assigned to each task or some tasks, by the apparatus 200. An award system be implemented, based on performance measures, where a certain prize or benefit is awarded to users after having completed tasks, or to the user who has completed the most tasks, or the most important tasks. In this context, collecting your IT equipment might have a higher value than getting a coffee/visiting the canteen.

Figs 5A and 5B schematically illustrate a display member of the I/O interface 314 of the wireless device 300, upon presenting tasks obtained from the apparatus 200, or from an application host under control of the apparatus 200. These figures are intended to visualize various examples of the effect caused on the wireless device 300, upon the apparatus 200 operating the steps of Fig. 4 as described above.

The wireless device has, based on step 420, received data indicative of at least four tasks A-D. These tasks represent task, some or all, of a task list 510 generated (410) by the apparatus 200. The application client in the wireless device 300 presents instructions associated with these tasks on the display of the I/O interface 314.

According to one example, it may be detected in the system 100 that completion of task B has been accomplished. Upon such detection, the apparatus 200 processes the task list to mark B as completed and/or remove task B from the list of tasks to be done, as shown in Fig. 5B.

Additionally, or alternatively, processing of the task list may involve reordering of the included tasks. In some examples, the generated tasks may be of a character such that while task A can be treated as a singular task, task C is preferably, or by necessity, carried out after task B. In other words, task C is dependent on task B. Now that task B is completed, it may further be detected that the wireless device 300 is at or near a location associated with task C, and/or that availability information (e.g., timing) for interaction with task C is advantageous or possible. Detection of location of the wireless device 300, and/or location of a further communication device associated with task C, may be carried out by the positioning system 410 and be obtained in the apparatus 200 from the infrastructure 400. Availability information may be obtained in the apparatus 200 from a communication device of an item or location associated with task C, or based on detection of how many other wireless devices are present proximate the task or item associated with task C. Based on such detection, the processing of the task list 440 may result in moving up task C in a task list order, by assigning a higher priority level to task C. Reconfiguration data is thereby transmitted by the apparatus 200 to the application client in the wireless device, causing updated presentation of task list 510, as shown in Fig. 5B. This realizes a reordering of the task list 510, presented to the user.

Furthermore, task list 510 of Fig. 5B indicates a new task E, not previously visible in task list 500. This is also caused by reconfiguration data received in the application client, comprising instructions related to the new task E. This too may be caused by the detected completion of task B and/or location data and/or timing related to task E, which indicates saved time of introduction by completing task E prior to task A. This realizes an addition of a task to the task list 510, presented to the user.

A visualized example of information shown on a display of the I/O interface 314 of the wireless device 300, associated with tasks for user introduction to a physical context is shown in Figs 6A and 6B.

Fig. 6A visualizes an overhead view of tasks 610-650 received in the application client of the wireless device 300. Tasks 640 and 650 are marked and shown as completed. Moreover, tasks 610, 620, and 630 are indicated as tasks to be carried out. In some examples, an indication 660 of total completion level is further provided.

By user interaction, further information or instructions related to a task may be shown. In the example of Fig. 6B, the task 610 has been selected, wherein a map function 611 in the wireless device provides an overview of an environment associated with at least the selected task 610. The map function 611 may indicate a symbol 613 associated with the task, corresponding to the tag header or name, in this example a coffee cup. The map function may further indicate current location 612 of the wireless device 300 itself, to assist navigation. Additionally, navigation information may be provided on the I/O interface 314, such as arrows on the map function 611 or audio instructions, to assist finding the location 613 of the task at hand.

In some examples, further items or persons associated with other tasks, located by on the positioning system 410, may be indicated in the map function 611 even while presenting information to task 610. This further promotes time-efficient introduction. This is exemplified Fig. 6B by a projector 614, wherein a task associated with the projector 614 may comprise an instruction to try out and learn how to connect to and use the projector 614. A highlight function may be provided on the map function 611 to clearly indicate that there is a task associated with that item (projector) 614. Even if the associated task is not initially visible on the screen as shown in Fig. 6A (it may be of lower priority than the indicated tasks), this may incite the user to carry out that task while currently being proximate to the item 614, for the sake of efficiency.

Various examples and features associated with the proposed solution have been outlined in the foregoing. The proposed solution may be carried out in accordance with any combination of the subject matter disclosed herein and as outlined in the clauses below.

Clause 1. An apparatus (200) for managing introduction of users to a physical context, said apparatus comprising logic circuitry (210) configured to control the apparatus to:
generate (410) a task list;
transmit (420), to an application client residing in a wireless device, data indicative of at least one task from said task list, wherein said data is indicative of an instruction, associated with the at least one task, to be presented on a user interface of the wireless device;
obtain (430) information associated with a task of the task list; and
process (440) the task list based on the obtained information.

Clause 2. The apparatus of clause 1, wherein said information is indicative of at least one of a level of completion of the at least one task, availability associated with a task of the task list, and or proximity associated with a task of the task list.

Clause 3. The apparatus of clause 1 or 2, wherein the logic circuitry is configured to control the apparatus to process the task list to transmit data indicative of a further task from said task list, and/or rearrange order of tasks in the task list, based on the obtained information.

Clause 4. The apparatus of any preceding clause, wherein the logic circuitry is configured to control the apparatus to transmit reconfiguration instructions to the application client based on the processed task list, wherein said reconfiguration instructions configure the application client to add a task, and/or rearrange order of tasks, to be presented on the user interface.

Clause 5. The apparatus of any preceding clause, wherein said instruction is associated with at least one of a location and interaction with an item related to the at least one task.

Clause 6. The apparatus of clause 5, wherein said item is at least one of a person and a device to interact with.

Clause 7. The apparatus of any preceding clause, wherein the logic circuitry is configured to control the apparatus to obtain said information from the application client.

Clause 8. The apparatus of clause 5 or 6, wherein the logic circuitry is configured to control the apparatus to obtain said information from a communication device, located at said item or location.

Clause 9. The apparatus of any preceding clause, wherein the logic circuitry is configured to control the apparatus to obtain a location of the wireless device from a positioning system.

Clause 10. The apparatus of clause 9, wherein the obtained information comprises the obtained location of the wireless device.

Clause 11. The apparatus of clause 9, wherein the logic circuitry is configured to control the apparatus to obtain said information responsive to the location of the wireless device matching a proximity criterion related to said position.

Clause 12. The apparatus of clause 10, wherein the logic circuitry is configured to control the apparatus to process the task list based on the location of the wireless device meeting a proximity criterion related to said position.

Clause 13. The apparatus of any preceding clause, wherein the logic circuitry is configured to control the apparatus to transmit data indicative of a plurality of tasks from said task list to the application client.

Clause 14. The apparatus of any preceding clause, wherein the logic circuitry is configured to control the apparatus to process the task list to mark the at least one task as completed, based on the obtained information.

Clause 15. The apparatus of any preceding clause, wherein the logic circuitry is configured to control the apparatus to transmit a further task to the application client responsive to the obtained information being indicative of the at least one task being completed.

Clause 16. A wireless device (300), comprising logic circuitry (310) configured to control the wireless device to:
implement (405) an application client configured to guide user introduction to a physical context;
receive (425), from an apparatus for managing the introduction, data indicative of at least one task from a task list; and
present (435), on a user interface, an instruction indicated by said data, associated with the at least one task.

Clause 17. The wireless device of clauses 16, wherein the logic circuitry is configured to control the wireless device to
receive (455) reconfiguration instructions from the apparatus; and,
reconfigure (465) presentation of tasks on the user interface, based on the reconfiguration instructions.

Clause 18. The wireless device of clause 16 or 17, wherein said data is indicative of an instruction associated with at least one of a location and interaction with an item related to the at least one task.

Clause 19. The wireless device of clause 18, wherein said item is at least one of a person and a device to interact with.

Clause 20. The wireless device of any of clauses 165-19, wherein the logic circuitry is configured to control the wireless device to:
obtain information indicative of a level of completion, or wireless device proximity to a location, of the at least one task; and
transmit (435) the information to the apparatus.

Clause 21. The wireless device of clause 20, wherein said information is indicative of a location of the wireless device.

Clause 22. The wireless device of clause 20 or 21, wherein the logic circuitry is configured to control the wireless device to transmit said information responsive to the location of the wireless device matching a proximity criterion related to said position.

Clause 23. The wireless device of any of clauses 16-22, wherein the logic circuitry is configured to control the wireless device to receive and present a plurality of tasks from said task list.

Clause 24. The wireless device of any of clauses 16-23, wherein the logic circuitry is configured to control the wireless device to receive and present a further task responsive to the at least one task being completed.

## Claims

1. An apparatus (200) for managing introduction of users to a physical context, said apparatus comprising logic circuitry (210) configured to control the apparatus to:
generate (410) a task list;
transmit (420), to an application client residing in a wireless device, data indicative of at least one task from said task list, wherein said data is indicative of an instruction, associated with the at least one task, to be presented on a user interface of the wireless device;
obtain (430) information associated with a task of the task list, wherein said information is indicative of at least one of a level of completion of the at least one task, availability associated with a task of the task list, and/or proximity associated with a task of the task list; and
process (440) the task list based on the obtained information to transmit data indicative of a further task from said task list, and/or rearrange order of tasks in the task list, based on the obtained information.

2. The apparatus of claim 1, wherein the logic circuitry is configured to control the apparatus to transmit reconfiguration instructions to the application client based on the processed task list, wherein said reconfiguration instructions configure the application client to add a task, and/or rearrange order of tasks, to be presented on the user interface.

3. The apparatus of claim 1 or 2, wherein said instruction is associated with at least one of a location and interaction with an item related to the at least one task.

4. The apparatus of claim 3, wherein said item is at least one of a person and a device to interact with.

5. The apparatus of any preceding claim, wherein the logic circuitry is configured to control the apparatus to obtain said information from the application client.

6. The apparatus of claim 3 or 4, wherein the logic circuitry is configured to control the apparatus to obtain said information from a communication device, located at said item or location.

7. The apparatus of any preceding claim, wherein the logic circuitry is configured to control the apparatus to obtain a location of the wireless device from a positioning system.

8. The apparatus of claim 7, wherein the obtained information comprises the obtained location of the wireless device.

9. The apparatus of claim 7, wherein the logic circuitry is configured to control the apparatus to obtain said information responsive to the location of the wireless device matching a proximity criterion related to said position.

10. The apparatus of claim 8, wherein the logic circuitry is configured to control the apparatus to process the task list based on the location of the wireless device meeting a proximity criterion related to said position.

11. The apparatus of any preceding claim, wherein the logic circuitry is configured to control the apparatus to transmit data indicative of a plurality of tasks from said task list to the application client.

12. The apparatus of any preceding claim, wherein the logic circuitry is configured to control the apparatus to process the task list to mark the at least one task as completed, based on the obtained information.

13. The apparatus of any preceding claim, wherein the logic circuitry is configured to control the apparatus to transmit a further task to the application client responsive to the obtained information being indicative of the at least one task being completed.

14. A wireless device (300), comprising logic circuitry (310) configured to control the wireless device to:
implement (405) an application client configured to guide user introduction to a physical context;
receive (425), from an apparatus for managing the introduction, data indicative of at least one task from a task list; and
present (435), on a user interface, an instruction indicated by said data, associated with the at least one task,
wherein said task list is processed by the apparatus based on information indicative of at least one of a level of completion of the at least one task, availability associated with a task of the task list, and/or proximity associated with a task of the task list, said processing controlling the wireless device to
reconfigure (465) presentation of tasks on the user interface.

15. The wireless device of claim 14, wherein the logic circuitry is configured to control the wireless device to:
obtain information indicative of a level of completion, or wireless device proximity to a location, of the at least one task; and
transmit (435) the information to the apparatus.
